# EUROPEAN PATENT SPECIFICATION

(11) **EP 3 995 954 B1**
(45) Date of publication and mention of the grant of the patent: **25.03.2026**
(21) Application number: 21830585.2
(22) Date of filing: 20.04.2021
(51) Int. Cl.: G06F 9/451, H04M 1/72403, H04M 1/72448, H04M 1/72454, H04M 1/72469, G06F 3/048, G06F 3/04817

(54) **METHOD FOR OPERATING WIDGET, TERMINAL AND STORAGE MEDIUM**
VERFAHREN ZUM BETRIEB EINES WIDGET, ENDGERÄT UND SPEICHERMEDIUM
PROCÉDÉ DE FONCTIONNEMENT DE WIDGET, TERMINAL ET SUPPORT DE STOCKAGE

(30) Priority: 14.09.2020 CN 202010960844
(43) Date of publication of application: 11.05.2022
(73) Proprietor: Shenzhen Transsion Holdings Co., Ltd., Shenzhen, Guangdong 518057 (CN)
(72) Inventor: SHEN, Jianfeng, Shenzhen, Guangdong 518057 (CN); SUN, Xiashuang, Shenzhen, Guangdong 518057 (CN); LIAO, Huan, Shenzhen, Guangdong 518057 (CN); YAN, Yating, Shenzhen, Guangdong 518057 (CN); WANG, Zhiyong, Shenzhen, Guangdong 518057 (CN); ZHENG, Pei, Shenzhen, Guangdong 518057 (CN); LI, Chenxiong, Shenzhen, Guangdong 518057 (CN)
(74) Representative: Osterhoff, Utz
(86) International application number: PCT/CN2021/088243
(87) International publication number: WO 2022/052470

(56) References cited:
- CN-A- 103 279 261
- CN-A- 106 325 836
- CN-A- 106 528 160
- CN-A- 110 704 139
- CN-A- 111 813 493
- US-A1- 2013 268 885
- US-A1- 2014 032 722
- US-A1- 2015 317 059

## Description

### TECHNICAL FIELD

The application relates to the technical field of terminals, in particular to a method of operating a component, a terminal and a computer readable storage medium.

### BACKGROUND

At present, in smart terminals (such as mobile phones, tablets, etc.), various desktop components (such as Widgets, etc.), such as weathers, music players, timetable disks, memos, emails, browsers, calendars, etc. can always be seen. When a user use a smart terminal, the user can select various desktop components to add to an interface of the terminal according to their own needs. At present, when adding desktop components to the smart terminal, the desktop components to be added are usually added to a free space of the interface of the terminal to avoid visual confusion caused by overlapped icons.

Those skilled in the art have been seeking solutions for the above problems.

The foregoing description is intended to provide general background information and does not necessarily constitute the prior art.

US 2015/317059 A1 discloses an application management method for mobile terminal is disclosed. The method comprises: acquiring all information of applications that have been installed or upgraded in the mobile terminal; determining whether each of the applications has a desktop widget; and if the determination result is "yes", then displaying an icon corresponding to an application having the desktop widget in an icon list in a first displaying manner. In this way, the user can accomplish the operation of adding the desktop widget of the application directly in the system application main menu without having to enter into the widget list. The present disclosure is simple and convenient to use and provides the user with good experience in use.

CN103279261A discloses an adding method of widgets of a wireless communication device. The adding method of the widgets of the wireless communication device comprises the steps of (1) setting an application icon which contains a widget to be of an editable mode according to preset operation carried out by a user on the application icon, containing the widget, of the wireless communication device, (2) magnifying or shrinking the application icon containing the widget according to editing operation carried out by the user on the application icon containing the widget, (3) monitoring the size of the application icon containing the widget, and (4) adding a corresponding widget type to a desktop of the wireless communication device when the situation that the application icon containing the widget is amplified or shrunk to the corresponding widget type is monitored. The invention further discloses the wireless communication device. According to the mode, the adding method of the widgets of the wireless communication device and the wireless communication device can improve efficiency of addition of the widgets, and can improve user experience.

### SUMMARY

### TECHNICAL ISSUES

At present, after the smart terminal displays the component display interface, users usually cannot know which component can be added to the free space of the current terminal interface, therefore, it often happens that the component selected by the user cannot be successfully added to the current terminal interface because a space required by the component is larger than the free space of the current terminal interface, and the current desktop component adding method is not intelligent enough.

### TECHNICAL SOLUTION

The technical problem to be solved by the present application is that, aiming at the defects of the related art, a method of operating a component, a terminal and a computer-readable storage medium are provided, to make the desktop component addition function more intelligent and humanized, and ensure the effectiveness of the operation of adding desktop components by users.

The present application is implemented as follows.

The present application is defined in claims 1 to 14.

In order to make the above and other objectives, features and advantages of the present application more apparent, preferred embodiments are set forth below and are described in detail with reference to the accompanying drawings.

### BENEFICIAL EFFECT

The present application provides a method of operating a component, a terminal and a computer-readable storage medium, the method of operating the component includes: obtaining a component adding instruction and free space information of a current interface; displaying components matching the free space information; receiving an adding instruction and adding a selected component to the current interface. Therefore, in the process of adding desktop components to the current interface, the present application can let the user clearly know which desktop component can be added to the current interface, therefore, the present application can avoid the situation that the user selects a desktop component which cannot be added to the current interface and performs redundant operations to search for another interface to receive the desktop component, therefore, the present application can make the desktop component adding function more intelligent and humanized, and ensure the simplicity and effectiveness of the operation of adding the desktop components by users.

### BRIEF DESCRIPTION OF THE DRAWINGS

The accompanying drawings are incorporated in the specification and constitute a part of the specification, the accompanying drawings show embodiments of the present application and are used to explain the principles of the present application together with the specification. **In** order to more clearly explain the technical solutions of the embodiments of the present application, the drawings required in the description of the embodiments will be briefly introduced below, and it will be obvious that other drawings can be obtained from these drawings without creative labor for those skilled in the art.
Fig. 1 is a schematic diagram of a hardware structure of a mobile terminal for implementing various embodiments of the present application;
Fig. 2 is an architecture diagram of a communication network system provided by embodiments of the present application;
Fig. 3 is a flow diagram of a method of operating a component according to a first embodiment of the present application;
Fig. 4 is a schematic diagram of triggering a component display interface provided by the first embodiment of the present application;
Fig. 5 is a flow diagram of a component screening step provided by the first embodiment of the present application;
Fig. 6 is a schematic diagram of adding a component provided by the first embodiment of the present application;
Fig. 7 is a flow diagram of a method of operating a component according to a second embodiment of the present application;
Fig. 8 is a flow diagram of adding a first component provided by the second embodiment of the present application;
Fig. 9 is a flow diagram of adding a second component provided by the second embodiment of the present application;
Fig. 10 is a flow diagram of a method of operating a component according to a third embodiment of the present application;
Fig. 11 is a schematic diagram of a structure of a terminal provided by a fourth embodiment of the present application.

The realization of the objectives, functional features and advantages of the present application will be further explained with reference to the accompanying drawings in combination with the embodiments. Specific embodiments of the present application have been shown by the above drawings and will be described in more detail later. These drawings and descriptions are not intended in any way to limit the scope of the present application but to convey the concepts of the present application to those skilled in the art by reference to the specific embodiments.

### DETAILED DESCRIPTION OF THE EMBODIMENTS

It should be understood that the specific embodiments described herein are intended to illustrate the present application only and not to limit the present application.

In the following description, the use of suffixes such as "module", "component" or "unit" used to indicate elements is only for the description of the present disclosure, and has no specific meaning in itself. Therefore, "module", "component" or "unit" can be used in a mixed manner.

The terminal can be implemented in various forms. For example, the terminal described herein can include a mobile phone, a tablet computer, a notebook computer, a hand-held computer, a personal digital assistants (PDA), a portable media player (PMP), a navigation device, a wearable device, a smart bracelet, a pedometer and other mobile terminals, as well as a fixed terminal such as a digital TV and a desktop computer.

The present disclosure takes a mobile terminal as an example to illustrate. Those skilled in the art will understand that, in addition to elements specifically used for mobile purposes, the configuration according to the embodiments of the present disclosure can also be applied to a fixed terminal.

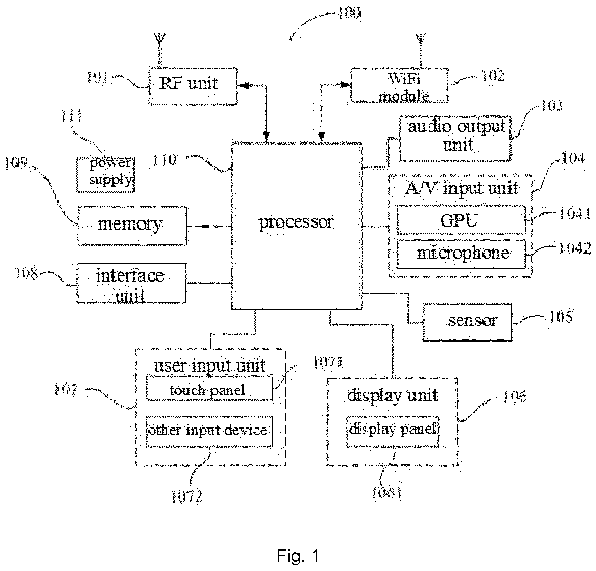

As shown in Fig. 1, Fig. 1 is a schematic structural diagram of a hardware of a mobile terminal according to embodiments of the present disclosure. The mobile terminal 100 includes a radio frequency (RF) unit 101, a Wi-Fi module 102, an audio output unit 103, an audio/video (A/V) input unit 104, a sensor 105, a display unit 106, a user input unit 107, an interface unit 108, a memory 109, a processor 110, a power supply 111 and other components. Those skilled in the art can understand that the structure of the mobile terminal shown in Fig. 1 does not constitute a limitation on the mobile terminal. The mobile terminal may include more or fewer components, or a combination of some components, or differently arranged components than shown in the figure.

Hereinafter, each component of the mobile terminal will be specifically introduced with reference to Fig. 1.

The radio frequency unit 101 can be used for transmitting and receiving signals during the process of transceiving information or talking. Specifically, after receiving the downlink information of the base station, the downlink information is processed by the processor 110; in addition, the uplink data is sent to the base station. Generally, the radio frequency unit 101 includes, but is not limited to, an antenna, at least one amplifier, a transceiver, a coupler, a low noise amplifier, a duplexer, and the like. Furthermore, the radio frequency unit 101 can also communicate with the network and other devices through wireless communication. The above-mentioned wireless communication can use any communication standard or protocol, including but not limited to Global System of Mobile communication (GSM), General Packet Radio Service (GPRS), Code Division Multiple Access 2000 (CDMA 2000), Wideband Code Division Multiple Access (WCDMA), Time Division-Synchronous Code Division Multiple Access (TD-SCDMA), Frequency Division Duplexing-Long Term Evolution (FDD-LTE), Time Division Duplexing-Long Term Evolution (TDD-LTE), or the like.

Wi-Fi is a short-range wireless transmission technology. The mobile terminal can help users transmit and receive email, browse webpage, and access streaming media through the Wi-Fi module 102, and Wi-Fi provides users with wireless broadband Internet access. Although Fig. 1 shows the Wi-Fi module 102, it is understandable that it is not a necessary component of the mobile terminal and can be omitted as needed without changing the essence of the present disclosure.

When the mobile terminal 100 is in a call request receiving mode, a call mode, a recording mode, a voice recognition mode, a broadcast receiving mode, or the like, the audio output unit 103 can convert the audio data received by the radio frequency unit 101 or the Wi-Fi module 102 or stored in the memory 109 into an audio signal and output the audio signal as sound. Moreover, the audio output unit 103 can also provide audio output related to a specific function performed by the mobile terminal 100 (for example, call signal reception sound, message reception sound, or the like). The audio output unit 103 can include a speaker, a buzzer, or the like.

The A/V input unit 104 is configured to receive audio or video signals. The A/V input unit 104 can include a graphics processing unit (GPU) 1041 and a microphone 1042. The graphics processing unit 1041 processes image data of still pictures or videos obtained by an image capture device (such as a camera) in a video capture mode or an image capture mode. The processed image frame can be displayed on the display unit 106. The image frame processed by the graphics processing unit 1041 can be stored in the memory 109 (or other storage medium) or sent via the radio frequency unit 101 or the Wi-Fi module 102. The microphone 1042 can receive sound (audio data) in operation modes such as a call mode, a recording mode, a voice recognition mode, and the like, and can process such sound into audio data. The processed audio (voice) data can be converted into a format that can be sent to a mobile communication base station via the radio frequency unit 101 in the case of a call mode for output. The microphone 1042 can implement various types of noise cancellation (or suppression) algorithms to eliminate (or suppress) noise or interference generated during the process of transceiving audio signals.

The mobile terminal 100 also includes at least one sensor 105, such as a light sensor, a motion sensor, and other sensors. Optionally, the light sensor includes an ambient light sensor and a proximity sensor. The ambient light sensor can adjust the brightness of the display panel 1061 according to the brightness of the ambient light. The proximity sensor can turn off the display panel 1061 and/or the backlight when the mobile terminal 100 is moved to the ear. A gravity acceleration sensor, as a kind of motion sensor, can detect the magnitude of acceleration in various directions (usually three axes). The gravity acceleration sensor can detect the magnitude and direction of gravity when it is stationary, and can identify the gesture of the mobile terminal (such as horizontal and vertical screen switching, related games, magnetometer attitude calibration), vibration recognition related functions (such as pedometer, tap), or the like. The mobile terminal can also be equipped with other sensors such as a fingerprint sensor, a pressure sensor, an iris sensor, a molecular sensor, a gyroscope, a barometer, a hygrometer, a thermometer, an infrared sensor and other sensors, which will not be repeated here.

The display unit 106 is configured to display information input by the user or information provided to the user. The display unit 106 can include a display panel 1061, and the display panel 1061 may be configured in the form of a liquid crystal display (LCD), an organic light emitting diode (OLED), or the like.

The user input unit 107 can be configured to receive inputted numeric or character information, and generate key signal input related to user settings and function control of the mobile terminal. Optionally, the user input unit 107 can include a touch panel 1071 and other input devices 1072. The touch panel 1071, also called a touch screen, can collect user touch operations on or near it (for example, the user uses fingers, stylus and other suitable objects or accessories to operate on the touch panel 1071 or near the touch panel 1071), and drive the corresponding connection device according to a preset program. The touch panel 1071 can include two parts: a touch detection device and a touch controller. The touch detection device detects the user's touch position, detects the signal brought by the touch operation, and transmits the signal to the touch controller. The touch controller receives the touch information from the touch detection device, converts the touch information into contact coordinates, and sends it to the processor 110, and can receive and execute the commands sent by the processor 110. Furthermore, the touch panel 1071 can be implemented in multiple types such as resistive, capacitive, infrared, and surface acoustic wave. In addition to the touch panel 1071, the user input unit 107 can also include other input devices 1072. Optionally, the other input devices 1072 can include, but are not limited to, one or more of physical keyboard, function keys (such as volume control buttons, switch buttons, etc.), trackball, mouse, joystick, etc., which are not specifically limited here.

Furthermore, the touch panel 1071 can cover the display panel 1061. After the touch panel 1071 detects a touch operation on or near it, the touch operation is transmitted to the processor 110 to determine the type of the touch event, and then the processor 110 provides a corresponding visual output on the display panel 1061 according to the type of the touch event. Although in Fig. 1, the touch panel 1071 and the display panel 1061 are used as two independent components to realize the input and output functions of the mobile terminal, in some embodiments, the touch panel 1071 and the display panel 1061 can be integrated to implement the input and output functions of the mobile terminal, which is not specifically limited here.

The interface unit 108 serves as an interface through which at least one external device can be connected to the mobile terminal 100. For example, the external device can include a wired or wireless headset port, an external power source (or battery charger) port, a wired or wireless data port, a memory card port, a port for connecting devices with identification modules, an audio input/output (I/O) port, a video I/O port, an earphone port, or the like. The interface unit 108 can be configured to receive input (such as data information, electricity, or the like) from an external device and transmit the received input to one or more elements in the mobile terminal 100 or can be configured to transfer data between the mobile terminal 100 and the external device.

The memory 109 can be configured to store software programs and various data. The memory 109 can mainly include a program storage area and a data storage area. The program storage area can store the operating system, at least one application required by the function (such as sound playback function, image playback function, etc.), or the like. The data storage area can store data (such as audio data, phone book, etc.) created based on the use of the mobile phone. Furthermore, the memory 109 can include a high-speed random access memory, and can also include a non-volatile memory, such as at least one magnetic disk storage device, a flash memory device, or other volatile solid-state storage devices.

The processor 110 is a control center of the mobile terminal, and uses various interfaces and lines to connect the various parts of the entire mobile terminal. By running or executing the software programs and/or modules stored in the memory 109, and calling the data stored in the memory 109, various functions and processing data of the mobile terminal are executed, thereby overall monitoring of the mobile terminal is performed. The processor 110 can include one or more processing units; and preferably, the processor 110 may integrate an application processor and a modem processor. The application processor mainly processes an operating system, a user interface, an application, or the like, and the modem processor mainly processes wireless communication. Understandably, the foregoing modem processor may not be integrated into the processor 110.

The mobile terminal 100 can also include a power source 111 (such as a battery) for supplying power to various components. Preferably, the power supply 111 can be logically connected to the processor 110 through a power management system, so that functions such as charging, discharging, and power consumption management can be managed through the power management system.

Although not shown in Fig. 1, the mobile terminal 100 can also include a Bluetooth module, or the like, which will not be repeated here.

In order to facilitate the understanding of the embodiments of the present disclosure, the following describes the communication network system on which the mobile terminal of the present disclosure is based.

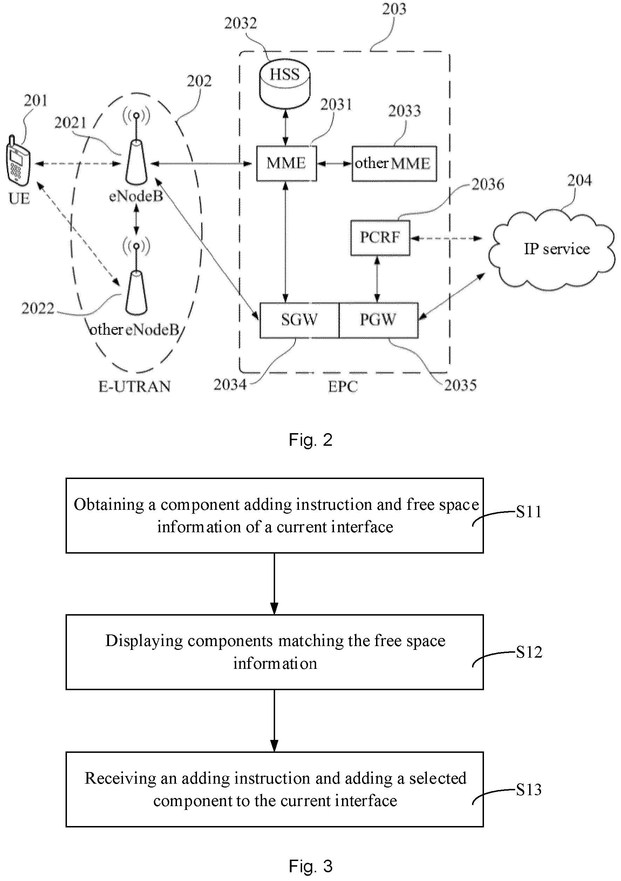

As shown in Fig. 2, Fig. 2 is an architecture diagram of a communication network system according to an embodiment of the present disclosure. The communication network system is an LTE system of general mobile communication technology. The LTE system includes a User Equipment (UE) 201, an Evolved UMTS Terrestrial Radio Access Network (E-UTRAN) 202, an Evolved Packet Core (EPC) 203, and an operator's IP service 204 that are sequentially connected in communication.

Optionally, the UE 201 can be the aforementioned terminal 100, which will not be repeated here.

E-UTRAN 202 includes eNodeB 2021 and other eNodeBs 2022. The eNodeB 2021 can be connected to other eNodeBs 2022 through a back haul (for example, an X2 interface), the eNodeB 2021 is connected to the EPC 203, and the eNodeB 2021 can provide access from the UE 201 to the EPC 203.

The EPC 203 can include Mobility Management Entity (MME) 2031, Home Subscriber Server (HSS) 2032, other MMEs 2033, Serving Gate Way (SGW) 2034, PDN Gate Way (PGW) 2035, Policy and Charging Rules Function (PCRF) 2036, and so on. MME 2031 is a control node that processes signaling between UE 201 and EPC 203, and provides bearer and connection management. HSS 2032 is configured to provide some registers to manage functions such as the home location register (not shown), and save some user-specific information about service feature, data rates, and so on. All user data can be sent through SGW 2034, PGW 2035 can provide UE 201 IP address allocation and other functions. PCRF 2036 is a policy and charging control policy decision point for service data flows and IP bearer resources, which selects and provides available policy and charging control decisions for policy and charging execution functional units (not shown).

The IP service 204 can include the Internet, an intranet, IP Multimedia Subsystem (IMS), or other IP services.

Although the LTE system is described above as an example, those skilled in the art should know that, the present disclosure is not only applicable to the LTE system, but also applicable to other wireless communication systems, such as GSM, CDMA2000, WCDMA, TD-SCDMA, and new network systems in the future, or the like, which is not limited here.

Based on the above hardware structure of the mobile terminal and the above communication network system, various embodiments of the present application are presented.

### First embodiment

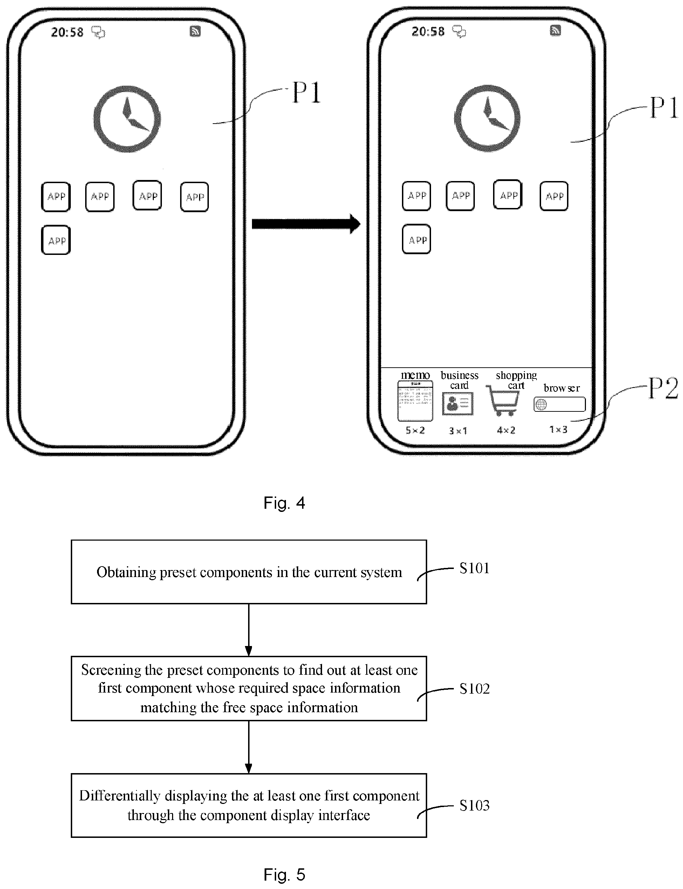

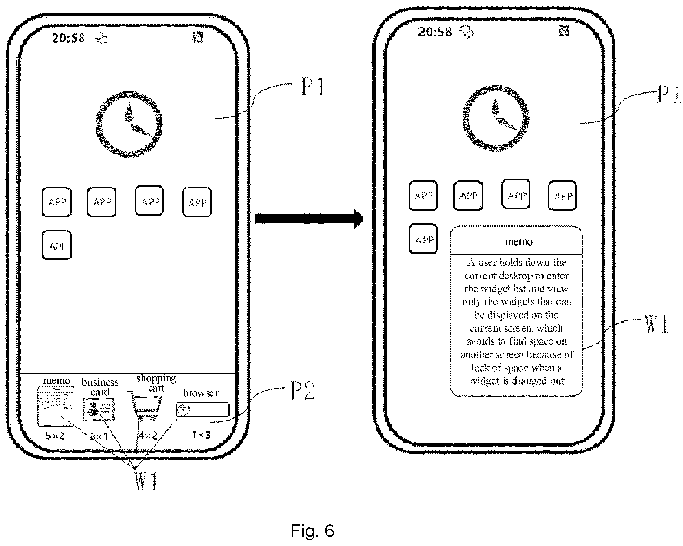

Fig. 3 is a flow diagram of a method of operating a component according to the first embodiment of the present application. Fig. 4 is a schematic diagram of triggering a component display interface provided by the first embodiment of the present application. Fig. 5 is a flow diagram of a component screening step provided by the first embodiment of the present application. Fig. 6 is a schematic diagram of adding a component provided by the first embodiment of the present application. Fig. 3, Fig. 4, Fig. 5, and Fig. 6 are referred for a clear description of the method of operating a component provided by the first embodiment of the present application.

The method of operating a component provided by the first embodiment of the present application includes:
S11: obtaining a component adding instruction and free space information of a current interface.

In one embodiment, the step S11 of acquiring a component adding instruction and free space information of the current interface, may include but is not limited to: obtaining interface operation information. A component adding instruction is obtained according to the interface operation information, to obtain the free space information of the current interface.

In one embodiment, the interface operation information may include, but is not limited to, virtual key selection information (e.g. virtual key click information), gesture information (e.g. click, long press, re-press, gesture from a distance, etc.), etc.

In one embodiment, the operation of obtaining the component adding instruction, for example, after receiving the gesture information of long pressing the screen, a virtual key for adding a component is displayed, and after the virtual key is clicked, the component adding instruction is obtained. For another example, a user operates the terminal with preset gestures, when the terminal obtains gesture information corresponding to a component adding function, the terminal obtains the component adding instruction.

In one embodiment, in step S11: obtaining the free space information of the current interface, the free space information may include, but is not limited to at least one of the following: free space size information, free space shape information, free space grid number information, and/or free space layout information. For example, the free space grid number information of the current interface is determined by grid parameters established by system itself and occupied space information of the current interface. For another example, a size of the free space of the current interface is calculated to obtain the free space size information.

S12: displaying components matching the free space information.

In one embodiment, the case of displaying components matching the free space information in step S12 includes at least one of: displaying components whose required area size information is not larger than (less than or equal to) the free space size information; and/or displaying components whose shape information is identical or similar to the free space shape information; and/or displaying components whose required grids are not more than (less than or equal to) the free space grid number information; and/or displaying components whose spatial layout information is identical or similar to the free space layout information.

In one embodiment, referring to Fig. 4, after obtaining the component adding instruction in the current interface P1, the component display operation can be performed to generate a component display interface P2 in the current interface P1, so as to display all components (such as memos, business cards, shopping carts, browsers, etc.) whose required space information matching the free space information of the current interface P1.

In one embodiment, the step S12: displaying components matching the free space information may include, but is not limited to: S101: obtaining preset components in the current system. Optionally, the preset components may be all components, or be components of a certain category (such as categories of communication, entertainment, learning, etc.), and/or be components of a certain priority (such as high, medium, low), the preset components can also be certain components screened according to usage times and/or usage frequencies (for example, only the components whose usage times exceed a preset threshold such as 3 times, and for another example, only the components whose average daily usage times exceed 2 times), or be certain components automatically determined according to the user's usage habits; S102: screening the preset components to find out at least one first component whose required space information matching the free space information (where the required space information includes at least one of required area size information, required shape, required grid number, spatial layout information, etc.); S103: differentially displaying the at least one first component through the component display interface. For example, after entering the component display interface according to the triggered component adding instruction, the preset components in the current system are obtained, and added into a list "list all", the list "list all" are traversed, all first components that can be added to the free space of the current interface are found according to the required space information of each component and the free space information, other components in the list "list all" are filtered out, and the filtered list "list all" are displayed in the component display interface.

In one embodiment, at least one first component whose required space information matches the free space information is found. For example, if the free space information obtained according to the grid parameters is 5 × 4, all components whose required space information is less than or equal to 5 × 4 are the first components, where the required space information less than or equal to 5 × 4, for example, includes 5 × 4, 5 × 3, 5 × 2, 5 × 1, 4 × 4, 4 × 3, 4 × 2, 4 × 1... 1 × 1.

In one embodiment, the case where the at least one first component is differentially displayed through the component display interface may include, but is not limited to at least one of the following: displaying only the first components through the component display interface, and/or displaying all the components through the component display interface, and/or highlighting the first components, and/or displaying all the components through the component display interface, and/or arranging the first components forward.

In one embodiment, all components are displayed through the component display interface, and/or all the first components are highlighted, for example, by scrolling through the component display interface, all the first components are highlighted by identification attributes different from other components, which may be, but are not limited to, identification colors, icon sizes, identification characters, or the like.

In one embodiment, the components matching the free space information are displayed in step S12, and the adding instruction can be triggered only by selecting the component which is differentially displayed in the component display interface at later.

In one embodiment, before the step S12: displaying components matching the free space information, it can include, but is not limited to: adjusting the free space information of the current interface; and/or adjusting components to be added according to the free space information of the current interface. The step S12: displaying components matching the free space information can include, but is not limited to: displaying components matching adjusted free space information after the free space information of the current interface is adjusted, and/or displaying adjusted components matching the free space information after the components to be added are adjusted according to the free space information of the current interface.

In the embodiment, the free space information of the current interface is adjusted. For example, irregularly arranged icons and/or components in the current interface are arranged according to preset arrangement rules (for example, being arranged from the lowest to the highest or from the highest to the lowest according to the usage frequency of users, for another example, being arranged from the earliest to the last or from the last to the earliest according to a time sequence of adding or updating the icons and/or components, and for still another example, being arranged according to display styles of the icons and/or components, including display sizes, display shapes, display colors, display fonts, etc. For still another example, updating the free space information after adjusting by splitting a component into at least two sub-components, and adjusting the display positions of the sub-components, or further splitting and adjusting the sub-components, etc., to obtain a suitable or larger free space) the sizes of the icons and/or the components in the current interface.

The components to be added are adjusted according to the free space information of the current interface, for example, the required area size information of a component that does not match the free space size information of the current interface is reduced by a preset multiple (for example, the required area size is reduced to one third of the originally required area size). Or the required grid number of a component that does not match the free space grid number information of the current interface is reduced by a preset grid number (for example, from 2 × 1 to 1 × 1). Or the shape or layout of a component that does not match the spatial shape or spatial layout information of the current interface (for example, rectangle is changed to square, and for example, horizontal layout is changed to vertical layout) is adjusted to conform to the shape or layout of the current interface.

S13: receiving an adding instruction and adding a selected component to the current interface.

In one embodiment, referring to Fig. 6, after receiving the adding instruction corresponding to the memo component W1, the memo component W1 is added to the free space of the current interface.

The method of operating a component provided by the first embodiment of the present application includes the following steps: S11: obtaining a component adding instruction and free space information of a current interface. S12: displaying components matching the free space information. S13: receiving an adding instruction and adding a selected component to the current interface. Therefore, in the process of adding a desktop component to the current interface, the method of operating a component provided by the first embodiment of the present application can let the user clearly know which desktop component can be added to the current interface, therefore, the present application can avoid the situation that the user selects a desktop component which cannot be added to the current interface and performs redundant operations to search for another interface to receive the desktop component, therefore, the method of operating a component provided by the first embodiment of the present application can make the desktop component adding function more intelligent and humanized, and ensure the simplicity and effectiveness of the operation of adding the desktop components by users.

### Second embodiment

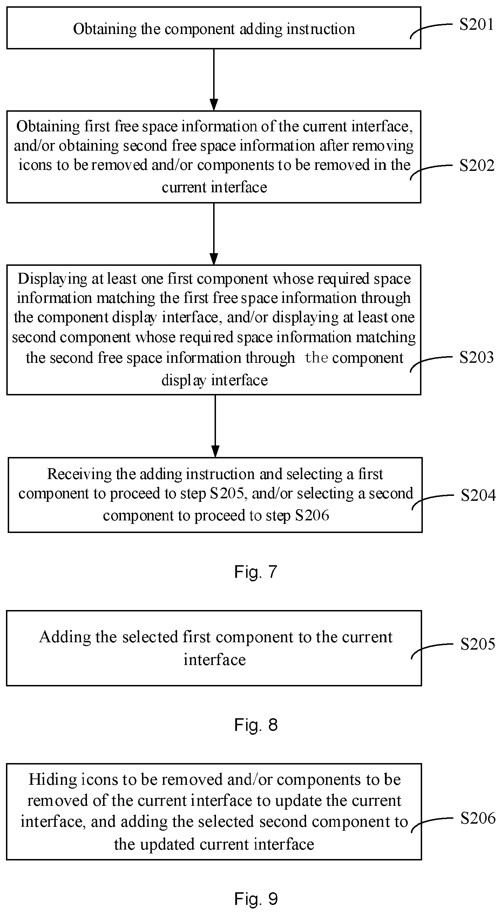

Fig. 7 is a flow diagram of the method of operating a component according to the second embodiment of the present application. Fig. 8 is a flowchart of adding a first component provided by the second embodiment of the present application. Fig. 9 is a flowchart of adding a second component provided by the second embodiment of the present application. Fig. 3, Fig. 7, Fig. 8, and Fig. 9 are referred for a clear description of the method of operating a component provided by the second embodiment of the present application.

The method of operating a component provided by the second embodiment of the present application includes:
S11: obtaining a component adding instruction and free space information of a current interface.

In one embodiment, the step S11: obtaining a component adding instruction and free space information of a current interface may include, but is not limited to: S201: obtaining the component adding instruction; S202: obtaining first free space information of the current interface, and/or obtaining second free space information after removing icons to be removed and/or components to be removed in the current interface.

In one embodiment, the icons to be removed may be those infrequently or never used or those automatically determined according to icon attributes (such as categories, contents, colors, sizes, etc.), a user's selection or the user's usage habits (generally corresponding to applications and/or services); and/or, the components to be removed may be those not commonly or never used or those automatically determined according to component attributes (such as categories, contents, colors, sizes, etc.), the user's selection or the user's usage habits.

In one embodiment, the step: obtaining second free space information after removing icons to be removed and/or components to be removed in the current interface may include, but is not limited to, obtaining the second free space information after removing the icons to be removed and/or the components to be removed in the current interface upon detecting presences of the icons to be removed and/or presences of the components to be removed in the current interface.

In one embodiment, a manner of detecting an icon to be removed and/or a component to be removed in the current interface, for example, when a system application is detected in the current interface, the usage information of the detected system application is obtained (for example, including a usage times, and/or a usage frequency, and/or a usage duration, and/or a last usage time, etc.). When the application and/or service (such as the infrequently used application and/or service) whose usage information meets a preset condition is obtained, it is determined that there is an icon to be removed in the current interface. For another example, when it is detected that a component corresponding to an application and/or service (such as weather, stock, etc.) exists in the current interface, the usage information of the component is obtained, and when it is detected that the usage information meets a preset condition (such as a usage times, and/or a usage frequency, and/or a usage duration, and/or a last usage time, etc.), the component is marked as to be removed.

S12: displaying components matching the free space information.

In one embodiment, the free space information can include first free space information and/or second free space information. Preferably, the first free space information can include at least one of the following: first free space size information, first free space shape information, first free space grid number information, and/or first free space layout information. Preferably, the second free space information can include at least one of the following: second free space size information, second free space shape information, second free space grid number information, and/or second free space layout information.

In one embodiment, in step S12, the case of displaying components matching the free space information can include at least one of the following: displaying components whose required area size information is not larger than the first free space size information and/or the second free space size information; and/or, displaying components whose shape information is identical to the first free space shape information and/or the second free space shape information; and/or, displaying components whose required grid number information is not more than the first free space grid number information and/or the second free space grid number information; and/or, displaying components whose spatial layout information is identical to the first free space layout information and/or the second free space layout information.

In one embodiment, the step S12: displaying components matching the free space information can include but is not limited to: S203: displaying at least one first component whose required space information matching the first free space information through the component display interface, and/or displaying at least one second component whose required space information matching the second free space information through the component display interface.

In one embodiment, the step S12: displaying components matching the free space information can include, but is not limited to: obtaining preset components in the current system; screening the preset components to find at least one component for selection whose required space information matching the free space information, the component for selection including a first component and/or a second component; differentially displaying the at least one component for selection through the component display interface.

In one embodiment, the case of differentially displaying the at least one component for selection through the component display interface can include at least one of the following: displaying only the component for selection through the component display interface; and/or, displaying the preset components through the component display interface, and/or highlighting the component for selection; and/or, displaying the preset components through the component display interface, and/or arranging the component for selection forward.

In the embodiment of the present invention the step S12: displaying components matching the free space information can include, but is not limited to: displaying components matching adjusted free space information after the free space information of the current interface is adjusted; and/or, displaying adjusted components matching the free space information after the components to be added are adjusted according to the free space information of the current interface.

S13: receiving an adding instruction and adding a selected component to the current interface.

In an embodiment, the step S13: receiving an adding instruction and adding a selected component to the current interface can include, but is not limited to: S204: receiving the adding instruction and selecting a first component to proceed to step S205, and/or selecting a second component to proceed to step S206. Optionally, step S205: adding the selected first component to the current interface. Optionally, step S206: hiding icons to be removed and/or components to be removed of the current interface to update the current interface, and adding the selected second component to the updated current interface (i.e. hiding the icons to be removed and/or the components to be removed of the current interface to update the current interface when the second component is selected according to the adding instruction; and adding the selected second component to the updated current interface).

In one embodiment, after adding the selected second component to the updated current interface, the step S206 can include, but is not limited to: adding a hiding mark of the application in the second component. receiving a view instruction for the hiding mark to view the hidden icon to be removed and/or the hidden component to be removed. Optionally, after viewing the hidden icon to be removed and/or the hidden component to be removed, the user can click the icon and/or the component to start the corresponding application and/or service.

In one embodiment, after the step S206: hiding icons to be removed and/or components to be removed of the current interface to update the current interface, and adding the selected second component to the updated current interface, the method can include but is not limited to: receiving a removal instruction for a selected second component, and removing the selected second component and restoring the updated current interface.

In one embodiment, the technical features of the method of operating a component provided in this embodiment and the technical features of the method of operating a component provided in the first embodiment can be arbitrarily combined on the premise of no contradiction, and will not be repeated here.

In the process of adding desktop components to the current interface, the method of operating a component provided by the second embodiment of the present application can provide the users with as many desktop components as possible that can be added to the current interface, and can clearly and intuitively let the users know these desktop components that can be added in the current interface. Therefore, the present application can avoid the situation that the user selects a desktop component which cannot be added to the current interface and performs redundant operations to search for another interface to receive the desktop component. Therefore, the method of operating a component provided by the first embodiment of the present application can make the desktop component adding function more intelligent and humanized, and ensure the simplicity and effectiveness of the operation of adding the desktop components by the users.

### Third embodiment

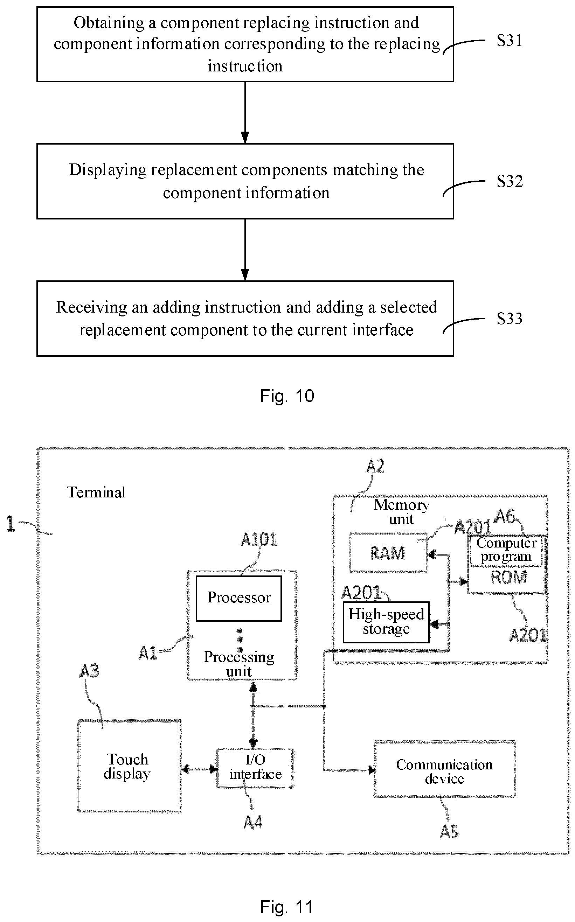

Fig. 10 is a flow diagram of the method of operating a component according to a third embodiment of the present application. Fig. 10 is referred for a clear description of the method of operating a component provided by the third embodiment of the present application.

The method of operating a component provided by the third embodiment of the present application includes:
S31: obtaining a component replacing instruction and component information corresponding to the replacing instruction.

In one embodiment, in step S31, it can be that the component replacing instruction is obtained, and component information of an initial component corresponding to the replacing instruction is obtained.

In one embodiment, the component information includes at least one of: component size information, component shape information, component grid number information, and/or component layout information.

S32: displaying replacement components matching the component information.

In one embodiment, the situation of displaying replacement components matching the component information can include, but is not limited to at least one of: displaying replacement components whose required area size information is not greater than the component size information; displaying replacement components whose spatial shape information is the same as the component shape information; displaying replacement components whose required grid numbers are not greater than the component grip number information; and displaying replacement components whose spatial layout information is identical to the component layout information.

In one embodiment, before displaying replacement components matching the component information, the step S32 can include but is not limited to: adjusting component information of the initial component; and/or adjusting a replacement component for replacement according to the component information. the step S32: displaying replacement components matching the part information includes: after adjusting the part information, displaying replacement components matching adjusted component information after the component information is adjusted; and/or displaying an adjusted replacement component after the replacement component for replacement is adjusted according to the component information.

In one embodiment, the component information of the initial component is adjusted, for example, the component grid number information of the initial component is reduced (or increased), or the component size information of the initial component is reduced (or increased).

In one embodiment, the replacement component for replacement is adjusted according to the component information, for example, a replacement component whose required area size information is larger than the component size information is selected, and the required area size information of the selected replacement component is reduced by a preset multiple. For another example, a replacement component whose required area size information is smaller than the component area information is selected, and the required area size information of the selected replacement component is adjusted to coincide with the component area information. For still another example, a replacement component whose required grid number information is larger than the component grid number information is selected, and the required grid number information of the selected replacement component is adjusted according to the component grid number information.

**In** one embodiment, the manner in which the initial component and/or the replacement component is adjusted may be a splitting manner, such as splitting according to a preset splitting manner, and/or adjusting or splitting according to information such as attribute information and/or layout information and/or shape information of the component. For example, a preset splitting manner of splitting a component can be as follows: if the component includes N sub-components, the component is split into N pieces; or sub-components of the same attribute is taken as one sub-component, and sub-components of a different attribute are taken as a second sub-component. For example the year, month and day sub-components and the hour, minute and second sub-components belong to the time class sub-components, they are not split but taken as one sub-component, and the weather sub-component is different from the time class sub-component and the weather sub-component and time class sub-components are split into two sub-components; or there are different layout partitions among sub-components contained by a component to be added, if each sub-component has its own edge, it splits according to the edges of the sub-components; if there is a partition line between sub-components, it splits according to the partition line between the sub-components; or other user-defined splitting manners, or splitting manners automatically determined according to the users' usage habits, etc., which are not limited here.

S33: receiving an adding instruction and adding a selected replacement component to the current interface.

In one embodiment, the step S33: receiving an adding instruction and adding a selected replacement component to the current interface can include, but is not limited to: receiving the adding instruction to add the selected replacement component to a location of the initial component in the current interface to replace the initial component.

In one embodiment, the technical features of the method of operating a component provided by this embodiment, and the technical features of the method of operating a component provided by the first and/or second embodiments of the present application can be arbitrarily combined on the premise of no contradiction (for example, the technical feature of displaying replacement components can be combined with the relevant feature of displaying second components in the second embodiment), and will not be repeated herein.

The method of operating a component provided by the third embodiment of the present application includes: S31: obtaining a component replacing instruction and component information corresponding to the replacing instruction; S32: displaying replacement components matching the component information; S33: receiving an adding instruction and adding a selected replacement component to the current interface. Therefore, in the process of replacing the initial component in the current desktop, the method of operating a component provided by the third embodiment of the present application can let the user clearly know which replacement component can be used to replace the initial component, thereby avoiding redundant operations to search for other interfaces or other initial components to receive or replace a replacement component after the user selects the replacement component that cannot be used for replacement. Therefore, the method of operating a component provided by the third embodiment of the present application can make the addition or replacement of the desktop components more intelligent and humanized, and ensure the simplicity and effectiveness of the operation of adding or replacing the desktop components by the user.

### Fourth embodiment

Fig. 11 is a schematic structural diagram of a terminal provided by the fourth embodiment of the present application. Fig. 11 is referred for a clear description of the terminal 1 provided by the fourth embodiment of the present application.

The terminal 1 provided by the fourth embodiment of the present application includes a processor A101 and a memory A201, the processor A101 is for executing a computer program A6 stored in the memory A201 to implement steps of the method of operating a component as described in the first embodiment, the second embodiment or the third embodiment.

In one embodiment, the terminal 1 provided in this embodiment may include at least one processor A101 and at least one memory A201. Among them, the at least one processor A101 can be referred to as a processing unit A1, and the at least one memory A201 can be referred to as a memory unit A2. Alternatively, the memory unit A2 stores the computer program A6, when the computer program A6 is executed by the processing unit A1, the terminal 1 provided by the present embodiment is caused to implement steps of the method of operating a component as described in the first embodiment, the second embodiment or the third embodiment, such as step S11: obtaining a component adding instruction and free space information of a current interface; step S12: displaying components matching the free space information; and step S13: receiving an adding instruction and adding a selected component to the current interface shown in Fig. 3; or such as step S310: obtaining a component replacing instruction and component information corresponding to the replacing instruction; step S32: displaying replacement components matching the component information; and step S33: receiving an adding instruction and adding a selected replacement component to the current interface shown in Fig. 1.

In one embodiment, the terminal 1 provided in this embodiment can include a plurality of memories A201 (simply referred to as memory units A2).

The memory unit A2 can be a volatile memory or a non-volatile memory, and can also include both volatile and non-volatile memories. The non-volatile memory can be read only memory (ROM), programmable read-only memory (PROM), erasable programmable read-only memory (EPROM), electrically erasable programmable read-only memory (EEPROM), ferromagnetic random access memory (FRAM), flash memory (Flash Memory), magnetic surface memory, optical disc, or read-only CD-ROM, compact disc read-only memory. The magnetic surface memory may be a magnetic disk memory or a magnetic tape memory. The volatile memory may be random access memory (RAM) which serves as an external cache. By way of illustration and not limitation, many forms of RAM are available, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory (ESDRAM), synclink dynamic random access memory (SLDRAM), and direct rambus random access memory (DRRAM). The memory unit A2 described in embodiments of the present application is intended to include but not limited to these and any other suitable types of memory.

In one embodiment, the terminal 1 further includes a bus connecting different components (e.g. the processor A101 and the memory A201, the touch display A3, etc.).

In one embodiment, the terminal 1 in this embodiment may further include a communication interface (e.g. the I/O Interface A4), which can be used to communicate with an external device.

In one embodiment, the terminal 1 provided in this embodiment can further include a communication device A5.

The terminal 1 provided by the fourth embodiment of the present application includes a memory A101 and a processor A201, the processor A101 is for executing the steps of the computer program A6 stored in the memory A201 to implement the method of operating the component as described in the first, second or third embodiment. Therefore, the terminal 1 provided in this embodiment can make the desktop component adding function more intelligent and humanized, and ensure the simplicity and effectiveness of the user's operation of adding desktop components.

The fourth embodiment of the present application also provides a computer-readable storage medium. The computer readable storage medium stores a computer program A6. When the computer program A6 is executed by the processor A101, steps such as steps S11 to S13 as shown in Fig. 3, steps S201 to S204 as shown in Fig. 7, or steps S31 to S33 as shown in Fig. 10 of the method of operating a component as described in the first, second or third embodiment are implemented.

In one embodiment, the computer-readable storage medium provided by the present embodiment can include any entity, device or recording medium capable of carrying computer program codes, such as ROM, RAM, magnetic disk, optical disk, flash memory, etc.

When the computer program A6 stored in the computer readable storage medium provided by the fourth embodiment of the present application is executed by the processor A101, the desktop component addition function can be more intelligent and humanized, and the simplicity and effectiveness of the operation of adding desktop components by users can be guaranteed.

The technical features of the above-described embodiments can be arbitrarily combined, and not all possible combinations of the technical features in the above-described embodiments have been described for the sake of concise description. However, as long as there is no contradiction in the combinations of these technical features, the combinations should be considered as falling in the scope described in this specification.

Optionally, it should be noted that the terms "comprise", "include" or any variants thereof herein are intended to cover non-exclusive inclusion, such that a process, a method, an article, or a device that includes a series of elements includes not only those elements, but also other elements that are not explicitly listed, or includes elements inherent to the process, method, article, or device. Without more restrictions, the element defined by the sentence "including a..." does not exclude the existence of other identical elements in the process, method, article or device that includes the element. Optionally, components, features, and elements with the same name in different embodiments of the present disclosure may have the same meaning or may have different meanings, the specific meaning thereof needs to be determined by the explanation in the specific embodiment or further combined with the context in the specific embodiment.

It should be understood that although the terms first, second, third, or the like, may be used herein to describe various information, the information should not be limited to these terms. These terms are only used to distinguish the same type of information from each other. For example, without departing from the scope of the present disclosure, a first information can also be referred to as a second information, and similarly, the second information can also be referred to as the first information. Depending on the context, the word "if" as used herein can be interpreted as "when", "while" or "in response to a determination". As used herein, the singular forms "a", "an", and "the" are intended to also include the plural, unless the context dictates to the contrary. It should be further understood that the terms "comprising" and "including" indicate the presence of the described features, steps, operations, elements, components, items, types, and/or groups, but do not exclude the existence, appearance or addition of one or more other features, steps, operations, elements, components, items, types, and/or groups. The terms "or" and "and/or" used herein are interpreted as inclusive or mean any one or any combination. Therefore, "A, B or C" or "A, B and/or C" means any of the following: A; B; C; A and B; A and C; B and C; A, B and C. An exception to this definition will only occur when the combination of elements, functions, steps or operations is inherently mutually exclusive in some way.

It should be understood that, although the steps in the flowchart in the embodiment of the present disclosure are displayed in sequence as indicated by the arrows, these steps are not necessarily executed in sequence in the order indicated by the arrows. Unless explicitly stated herein, the execution of these steps is not strictly limited in order, and the steps can be executed in other orders. Besides, at least part of the steps in the figure may include multiple sub-steps or multiple stages. These sub-steps or stages are not necessarily executed at the same time, but can be executed at different times. The order of execution is not necessarily performed sequentially, but may be performed alternately or alternately with at least part of other steps or sub-steps or stages of other steps.

It should be noted that step codes such as S11 and S12 herein are used for the purpose of expressing the corresponding content more clearly and concisely, and do not constitute a substantial restriction on the order. In specific implementation, those skilled in the art may execute S12 first and then execute S11, and these should all fall within the scope of the present disclosure.

The present application also provides an apparatus comprising a memory, a processor, and a computer program stored in the memory and executable by the processor, when the computer program is executed by the processor, steps of the method described above are realized.

The present application also provides a computer storage medium storing a computer program, when the computer program is executed by a processor, steps of the method described above are realized.

Embodiments of the present application also provide a computer program product comprising computer program code, when the computer program code are run on a computer, the computer is caused to perform the methods described in various possible embodiments above.

Embodiments of the present application also provide a chip including a memory for storing a computer program and a processor for invoking the computer program from the memory and running the computer program to cause a device equipped with the chip to perform the methods described in various possible embodiments above.

### INDUSTRIAL PRACTICALITY

The present application provides a method of operating a component, a terminal and a computer-readable storage medium, the method of operating the component comprises: obtaining a component adding instruction and free space information of a current interface; displaying components matching the free space information; receiving an adding instruction and adding a selected component to the current interface. Therefore, in the process of adding desktop components to the current interface, the present application can let the user clearly know which desktop component can be added to the current interface, therefore, the present application can avoid the situation that the user selects a desktop component which cannot be added to the current interface and performs redundant operations to search for another interface to receive the desktop component, therefore, the present application can make the desktop component adding function more intelligent and humanized, and ensure the simplicity and effectiveness of the operation of adding the desktop components by users.

## Claims

1. A method of operating a component, comprising:
(S11), obtaining a component adding instruction and free space information of a current interface;
(S12), displaying components matching the free space information;
(S13), receiving an adding instruction and adding a selected component to the current interface;
wherein the step of (S12), displaying components matching the free space information comprises: displaying components matching adjusted free space information after adjusting the free space information of the current interface, and/or displaying adjusted components matching the free space information after adjusting components to be added according to the free space information of the current interface;
the adjusting the free space information of the current interface comprises: splitting a component into at least two sub-components, and adjusting display positions of the sub-components; and
the adjusting the components to be added comprises: reducing required area size information of a component that does not match free space size information of the current interface by a preset multiple; or reducing a required grid number of a component that does not match the free space grid number information of the current interface by a preset grid number; or adjusting a shape or a layout of a component that does not match a free spatial shape or spatial layout information of the current interface.

2. The method as claimed in claim 1, wherein, the step of (S11), obtaining a component adding instruction and a free space information of a current interface comprises: obtaining interface operation information, triggering the component adding instruction according to the interface operation information to obtain the free space information of the current interface.

3. The method as claimed in claim 1, wherein the step of (S11), obtaining the component adding instruction and the free space information of the current interface comprises:
(S201), obtaining the component adding instruction;
(S202), obtaining first free space information of the current interface, and/or
upon detecting presence of an icon to be removed or a component to be removed, obtaining second free space information after removing the icon to be removed and/or the component to be removed in the current interface.

4. The method as claimed in claim 1, wherein the icon to be removed is an icon that is not commonly used or never used or is automatically determined according to an icon attribute, a user's selection or the user's usage habit; and/or, the component to be removed is a component that is not commonly used or never used or is automatically determined according to a component attribute, the user's selection or the user's usage habit.

5. The method as claimed in claim 1, wherein the step of (S12), displaying components matching the free space information comprises:
the free space information including first free space information and/or second free space information;
(S203), displaying at least one first component whose required space information matching the first free space information through a component display interface, and/or
displaying at least one second component whose required space information matching the second free space information through the component display interface.

6. The method as claimed in claim 1, wherein the step of (S12), displaying components matching the free space information comprises:
(S101), obtaining preset components in a current system;
(S102), screening the preset components to find at least one first component whose required space information matching the free space information,
(S103), differentially displaying the at least one first component through a component display interface.

7. The method as claimed in claim 6, wherein the preset components are all components, or components of a certain category and/or of a certain priority, or components selected according to usage times and/or frequency values, or components automatically determined according to a user's usage habits.

8. The method as claimed in claim 6, wherein (S103), differentially displaying the at least one first component through a component display interface comprises at least one of the following:
displaying only the first component through the component display interface;
displaying the preset components through the component display interface;
highlighting the first component;
displaying the preset components through the component display interface, and/or arranging the first component forward.

9. The method as claimed in claim 1, wherein the free space information comprises at least one of the following: free space size information, free space shape information, free space grid number information, and/or free space layout information.

10. The method as claimed in any one of claims 1 to 9, wherein the step of (S13), receiving an adding instruction and adding a selected component to the current interface comprises: (S206), when selecting a second component according to the adding instruction, hiding the icon to be removed and/or the component to be removed in the current interface to update the current interface, and adding the selected second component to the updated current interface.

11. The method as claimed in claim 10, wherein, after the step of (S12), adding the selected second component to the updated current interface, the method comprises: receiving a removal instruction for the selected second component, removing the selected second component, and restoring the updated current interface.

12. The method as claimed in any one of claims 1 to 9, wherein displaying components matching the free space information comprises at least one of the following:
displaying components whose required area size information not greater than free space area information;
displaying components whose shape information identical to free space shape information;
displaying components whose grid number information not greater than free space grid number information;
displaying component whose spatial layout information identical to free space layout information.

13. A terminal, comprising a memory (A101) and a processor (A201);
wherein the processor (A201) is configured to execute a computer program stored in the memory (A101) to implement the steps of the method of operating a component as claimed in any one of claims 1 to 12.

14. A computer-readable storage medium, wherein the computer-readable storage medium storing a computer program, when the computer program is executed by a processor, the steps of the method of operating a component as claimed in any one of claims 1 to 12 are implemented.

## Patentansprüche

1. Ein Verfahren zum Betreiben einer Komponente, umfassend:
(S11) Empfangen einer Anweisung zum Hinzufügen einer Komponente und von freien Flächen-Informationen einer aktuellen Benutzeroberfläche;
(S12) Anzeigen von Komponenten, die mit den freien Flächen-Informationen übereinstimmen;
(S13) Empfangen einer Anweisung zum Hinzufügen und Hinzufügen einer ausgewählten Komponente zur aktuellen Benutzeroberfläche;
wobei der Schritt (S12), das Anzeigen von Komponenten, die mit den Freirauminformationen übereinstimmen, Folgendes umfasst: das Anzeigen von Komponenten, die mit den angepassten Freirauminformationen übereinstimmen, nach Anpassung der Freirauminformationen der aktuellen Benutzeroberfläche, und/oder das Anzeigen angepasster Komponenten, die mit den Freirauminformationen übereinstimmen, nach Anpassung der hinzuzufügenden Komponenten gemäß den Freirauminformationen der aktuellen Benutzeroberfläche;
wobei das Anpassen der Freirauminformationen der aktuellen Benutzeroberfläche Folgendes umfasst: das Aufteilen einer Komponente in mindestens zwei Unterkomponenten sowie das Anpassen der Anzeigepositionen der Unterkomponenten;
wobei das Anpassen der hinzuzufügenden Komponenten Folgendes umfasst: das Reduzieren der erforderlichen Flächengrößeninformationen einer Komponente, die nicht mit den Freiraum-Größeninformationen der aktuellen Benutzeroberfläche übereinstimmt, um ein vorgegebenes Vielfaches; oder das Reduzieren der erforderlichen Rasteranzahl einer Komponente, die nicht mit den Freiraum-Rasteranzahlinformationen der aktuellen Benutzeroberfläche übereinstimmt, um eine vorgegebene Rasteranzahl; oder das Anpassen einer Form oder eines Layouts einer Komponente, die nicht mit einer freien räumlichen Form oder räumlichen Layoutinformationen der aktuellen Benutzeroberfläche übereinstimmt.

2. Verfahren nach Anspruch 1, wobei der Schritt (S11), Erhalten einer Anweisung zum Hinzufügen einer Komponente und von freien Flächen-Informationen einer aktuellen Benutzeroberfläche, folgendes umfasst: Empfangen von Betriebsinformationen zur Benutzeroberfläche und Auslösen der Anweisung zum Hinzufügen der Komponente entsprechend den Betriebsinformationen zur Benutzeroberfläche, um die freien Flächen-Informationen der aktuellen Benutzeroberfläche zu erhalten.

3. Verfahren nach Anspruch 1, wobei der Schritt (S11), Erhalten der Anweisung zum Hinzufügen einer Komponente und der freien Flächen-Informationen der aktuellen Benutzeroberfläche, Folgendes umfasst:
(S201) Erhalten der Anweisung zum Hinzufügen der Komponente;
(S202) Ermitteln erster freier Flächen-Informationen der aktuellen Benutzeroberfläche und/oder
bei Erkennung des Vorhandenseins eines zu entfernenden Symbols oder einer zu entfernenden Komponente: Ermitteln zweiter Freirauminformationen nach dem Entfernen des zu entfernenden Symbols und/oder der zu entfernenden Komponente in der aktuellen Benutzeroberfläche.

4. Verfahren nach Anspruch 1, wobei das zu entfernende Symbol ein Symbol ist, das nicht häufig verwendet wird oder niemals verwendet wird oder entsprechend einer Symbol-Eigenschaft, einer Auswahl des Anwenders oder den Nutzungsgewohnheiten des Anwenders automatisch bestimmt wird; und/oder wobei die zu entfernende Komponente eine Komponente ist, die nicht häufig verwendet wird oder niemals verwendet wird oder entsprechend einer Komponenten-Eigenschaft, einer Auswahl des Anwenders oder den Nutzungsgewohnheiten des Anwenders automatisch bestimmt wird.

5. Verfahren nach Anspruch 1, wobei der Schritt (S12), Anzeigen von Komponenten, die mit den freien Flächen-Informationen übereinstimmen, Folgendes umfasst:
wobei die freien Flächen-Informationen erste freie Flächen-Informationen und/oder zweite freie Flächen-Informationen einschließen;
(S203) Anzeigen mindestens einer ersten Komponente, deren erforderliche Flächen-Informationen über eine Komponenten-Anzeigeoberfläche mit den ersten freien Flächen-Informationen übereinstimmen; und/oder
Anzeigen mindestens einer zweiten Komponente, deren erforderliche Flächen-Informationen über die Komponenten-Anzeigeoberfläche mit den zweiten freien Flächen-Informationen übereinstimmen.

6. Verfahren nach Anspruch 1, wobei der Schritt (S12), Anzeigen von Komponenten, die mit den freien Flächen-Informationen übereinstimmen, Folgendes umfasst:
(S101) Ermitteln von vordefinierten Komponenten in einem aktuellen System;
(S102) Filtern der vordefinierten Komponenten zum Finden mindestens einer ersten Komponente, deren erforderliche Flächen-Informationen mit den freien Flächen-Informationen übereinstimmen;
(S103) Differentielle Anzeige der mindestens einen ersten Komponente über eine Komponenten-Anzeigeoberfläche.

7. Verfahren nach Anspruch 6, wobei die vordefinierten Komponenten Folgendes umfassen können: alle Komponenten, und/oder Komponenten einer bestimmten Kategorie und/oder mit einer bestimmten Priorität; Komponenten, die entsprechend der Anzahl der Nutzungen und/oder den Häufigkeitswerten ausgewählt werden; oder Komponenten, die entsprechend den Nutzungsgewohnheiten eines Benutzers automatisch bestimmt werden.

8. Verfahren nach Anspruch 6, wobei der Schritt (S103), differentielle Anzeige der mindestens einen ersten Komponente über eine Komponenten-Anzeigeoberfläche umfasst mindestens eine der folgenden:
Anzeigen ausschließlich der ersten Komponente über die Komponenten-Anzeigeoberfläche;
Anzeigen der vordefinierten Komponenten über die Komponenten-Anzeigeoberfläche;
Hervorheben der ersten Komponente;
Anzeigen der vordefinierten Komponenten über die Komponenten-Anzeigeoberfläche und/oder Vorrücken der ersten Komponente.

9. Verfahren nach einem der Ansprüche 1 bis 9, wobei die freien Flächen-Informationen mindestens eine der folgenden Informationen umfassen:
Informationen zur Größe des freien Bereichs,
Informationen zur Form des freien Bereichs,
Informationen zur Anzahl der freien Gitterzellen, und/oder
Informationen zur räumlichen Anordnung des freien Bereichs.

10. Verfahren nach einem der Ansprüche 1 bis 9, wobei der Schritt (S13), Empfangen einer Anweisung zum Hinzufügen und Hinzufügen einer ausgewählten Komponente zur aktuellen Benutzeroberfläche, Folgendes umfasst: (S206) Beim Auswählen einer zweiten Komponente entsprechend der Hinzufügungsanweisung Verbergen des zu entfernenden Symbols und/oder der zu entfernenden Komponente in der aktuellen Benutzeroberfläche zur Aktualisierung der aktuellen Benutzeroberfläche und Hinzufügen der ausgewählten zweiten Komponente zur aktualisierten aktuellen Benutzeroberfläche.

11. Verfahren nach Anspruch 10, wobei nach dem Schritt (S13), bei dem die ausgewählte zweite Komponente der aktualisierten aktuellen Benutzeroberfläche hinzugefügt wird, das Verfahren ferner Folgendes umfasst: Empfangen einer Löschanweisung für die ausgewählte zweite Komponente, Entfernen der ausgewählten zweiten Komponente, und Wiederherstellen der aktualisierten aktuellen Benutzeroberfläche.

12. Verfahren nach einem der Ansprüche 1 bis 9, wobei das Anzeigen von Komponenten, die mit den freien Flächen-Informationen übereinstimmen, mindestens eine der folgenden Maßnahmen umfasst:
Anzeigen von Komponenten, deren erforderliche Flächen-Größeninformationen nicht größer sind als die freien Flächen-Größeninformationen;
Anzeigen von Komponenten, deren Forminformationen identisch mit den freien Flächen-Forminformationen sind;
Anzeigen von Komponenten, deren Gitter-Zahlinformationen nicht größer sind als die freien Flächen-Gitter-Zahlinformationen;
Anzeigen von Komponenten, deren räumliche Anordnungsinformationen identisch mit den freien Flächen-Anordnungsinformationen sind.

13. Ein Terminal, umfassend:
einen Speicher (A101) und
einen Prozessor (A201);
wobei der Prozessor (A201) so eingerichtet ist, dass er ein im Speicher (A101) gespeichertes Computerprogramm ausführt, um die Schritte des Verfahrens zum Betreiben einer Komponente gemäß einem der Ansprüche 1 bis 12 auszuführen

14. Ein computerlesbares Speicher-Medium, auf dem ein Computerprogramm gespeichert ist, wobei das Computerprogramm, wenn es von einem Prozessor ausgeführt wird, dazu eingerichtet ist, die Schritte des Verfahrens zum Betreiben einer Komponente gemäß einem der Ansprüche 1 bis 12 auszuführen.

## Revendications

1. Procédé de fonctionnement d'un composant, comprenant:
(S11) la réception d'une instruction d'ajout d'un composant et d'informations d'espace libre d'une interface utilisateur actuelle;
(S12) l'affichage de composants correspondant auxdites informations d'espace libre;
(S13) la réception d'une instruction d'ajout et l'ajout d'un composant sélectionné à l'interface utilisateur actuelle;
dans lequel l'étape (S12), consistant à afficher des composants correspondant aux informations d'espace libre, comprend : l'affichage de composants correspondant à des informations d'espace libre ajustées après ajustement des informations d'espace libre de l'interface utilisateur actuelle, et/ou l'affichage de composants ajustés correspondant aux informations d'espace libre après ajustement des composants à ajouter en fonction des informations d'espace libre de l'interface utilisateur actuelle ;
dans lequel l'ajustement des informations d'espace libre de l'interface utilisateur actuelle comprend : la division d'un composant en au moins deux sous-composants ainsi que l'ajustement des positions d'affichage des sous-composants ;
dans lequel l'ajustement des composants à ajouter comprend: la réduction des informations relatives à la taille de surface requise d'un composant ne correspondant pas aux informations de taille d'espace libre de l'interface utilisateur actuelle d'un multiple prédéfini; ou la réduction du nombre de grilles requis d'un composant ne correspondant pas aux informations relatives au nombre de grilles de l'espace libre de l'interface utilisateur actuelle d'un nombre de grilles prédéfini; ou l'ajustement d'une forme ou d'une disposition d'un composant ne correspondant pas à une forme spatiale libre ou à des informations de disposition spatiale de l'interface utilisateur actuelle.

2. Procédé selon la revendication 1, dans lequel l'étape (S11), consistant à obtenir une instruction d'ajout d'un composant et des informations d'espace libre d'une interface utilisateur actuelle, comprend: la réception d'informations d'opération relatives à l'interface utilisateur et le déclenchement de l'instruction d'ajout du composant en fonction desdites informations d'opération, afin d'obtenir les informations d'espace libre de l'interface utilisateur actuelle.

3. Procédé selon la revendication 1, dans lequel l'étape (S11) comprend:
(S201) l'obtention de l'instruction d'ajout du composant;
(S202) la détermination de premières informations d'espace libre de l'interface utilisateur actuelle; et/ou
lors de la détection de la présence d'une icône à supprimer ou d'un composant à supprimer: la détermination de secondes informations d'espace libre après suppression de l'icône à supprimer et/ou du composant à supprimer dans l'interface utilisateur actuelle.

4. Procédé selon la revendication 1, dans lequel l'icône à supprimer est une icône rarement utilisée ou jamais utilisée, ou déterminée automatiquement en fonction d'une propriété de l'icône, d'une sélection de l'utilisateur ou des habitudes d'utilisation de l'utilisateur ; et/ou le composant à supprimer est un composant rarement utilisé ou jamais utilisé, ou déterminé automatiquement en fonction d'une propriété du composant, d'une sélection de l'utilisateur ou des habitudes d'utilisation de l'utilisateur.

5. Procédé selon la revendication 1, dans lequel l'étape (S12) comprend:
les informations d'espace libre comprenant des premières informations d'espace libre et/ou des secondes informations d'espace libre;
(S203) l'affichage d'au moins un premier composant dont les informations de surface requise via une interface d'affichage de composants correspondent aux premières informations d'espace libre; et/ou
l'affichage d'au moins un second composant dont les informations de surface requise via l'interface d'affichage de composants correspondent aux secondes informations d'espace libre.

6. Procédé selon la revendication 1, dans lequel l'étape (S12) comprend:
(S101) la détermination de composants prédéfinis dans un système actuel;
(S102) le filtrage des composants prédéfinis afin de trouver au moins un premier composant dont les informations de surface requise correspondent aux informations d'espace libre;
(S103) l'affichage différencié dudit au moins un premier composant via une interface d'affichage de composants.

7. Procédé selon la revendication 6, dans lequel les composants prédéfinis peuvent comprendre: tous les composants, et/ou des composants d'une catégorie déterminée et/ou d'une priorité déterminée ; des composants sélectionnés en fonction du nombre d'utilisations et/ou de valeurs de fréquence ; ou des composants déterminés automatiquement en fonction des habitudes d'utilisation d'un utilisateur.

8. Procédé selon la revendication 6, dans lequel l'étape (S103) comprend au moins l'une des mesures suivantes:
l'affichage uniquement du premier composant via l'interface d'affichage de composants;
l'affichage des composants prédéfinis via l'interface d'affichage de composants;
la mise en évidence du premier composant;
l'affichage des composants prédéfinis via l'interface d'affichage de composants et/ou l'avancement du premier composant.

9. Procédé selon l'une quelconque des revendications 1 à 9, dans lequel les informations d'espace libre comprennent au moins l'une des informations suivantes:des informations relatives à la taille de la zone libre;des informations relatives à la forme de la zone libre;des informations relatives au nombre de cellules de grille libres; et/ou des informations relatives à la disposition spatiale de la zone libre.

10. Procédé selon l'une quelconque des revendications 1 à 9, dans lequel l'étape (S13) comprend: (S206) lors de la sélection d'un second composant en fonction de l'instruction d'ajout, la dissimulation de l'icône à supprimer et/ou du composant à supprimer dans l'interface utilisateur actuelle afin de mettre à jour l'interface utilisateur actuelle, et l'ajout du second composant sélectionné à l'interface utilisateur actuelle mise à jour.

11. Procédé selon la revendication 10, comprenant en outre, après l'étape (S13): la réception d'une instruction de suppression du second composant sélectionné; la suppression du second composant sélectionné; et la restauration de l'interface utilisateur actuelle mise à jour.

12. Procédé selon l'une quelconque des revendications 1 à 9, dans lequel l'affichage de composants correspondant aux informations d'espace libre comprend au moins l'une des mesures suivantes:
l'affichage de composants dont les informations de taille de surface requise ne sont pas supérieures aux informations de taille d'espace libre;
l'affichage de composants dont les informations de forme sont identiques aux informations de forme de l'espace libre;
l'affichage de composants dont les informations relatives au nombre de grilles ne sont pas supérieures aux informations relatives au nombre de grilles de l'espace libre;
l'affichage de composants dont les informations de disposition spatiale sont identiques aux informations de disposition de l'espace libre.

13. Terminal, comprenant :une mémoire (A101) et un processeur (A201), le processeur (A201) étant configuré pour exécuter un programme informatique stocké dans la mémoire (A101) afin de mettre en œuvre les étapes du procédé selon l'une quelconque des revendications 1 à 12.

14. Support d'enregistrement lisible par ordinateur, sur lequel est stocké un programme informatique, ledit programme informatique étant configuré, lorsqu'il est exécuté par un processeur, pour mettre en œuvre les étapes du procédé selon l'une quelconque des revendications 1 à 12.
